# EUROPEAN PATENT APPLICATION

(11) **EP 2 508 489 A2**
(43) Date of publication of application: **10.10.2012**
(21) Application number: 10834732.9
(22) Date of filing: 22.11.2010
(51) Int. Cl.: C02F 9/08, C02F 1/58, C02F 103/34

(54) **METHOD FOR TREATING WASTEWATER PRODUCED DURING THE MANUFACTURE OF NITRO COMPOUNDS**

(30) Priority: 01.12.2009 KR 20090117943
(71) Applicant: Huchems Fine Chemical Corp., Seoul 100-013 (KR)
(72) Inventor: BAE, Chong Pil, Hwaseong-si Gyeonggi-do 445-170 (KR); PARK, Chang Gag, Yeosu-si Jeollanam-do 555-708 (KR); KIM, Dong Ha, Yeosu-si Jeollanam-do 555-809 (KR); KIM, Soon Gi, Seoul 136-054 (KR)
(74) Representative: Manitz, Finsterwald & Partner GbR
(86) International application number: PCT/KR2010/008224
(87) International publication number: WO 2011/068317

(57) **Abstract**

This invention relates to a method of treating waste water produced during the nitration of compounds, which includes an appropriate pretreatment process and a vacuum evaporation process, so that acidic or alkaline aqueous waste water which is difficult to treat via conventional processes can be easily treated without performing microorganism treatment.

## Description

### Technical Field

The present invention relates to a method of treating waste water produced during nitration of compounds, and more particularly to a method of treating aqueous waste water which is difficult to treat via conventional processes, using an appropriate pretreatment process and a vacuum evaporation process.

### Background Art

To avoid loss of dinitrotoluene and mononitrobenzene and to discharge process waste water which is to be biologically treated, it is necessary to treat reaction water and washing water. A typical process of preparing dinitrotoluene or mononitrobenzene from toluene or benzene and mixed acid, i.e. a mixture of sulfuric acid and nitric acid produces aqueous waste water which is composed of the acidic reaction water which is distilled in the step of concentrating sulfuric acid, and also the alkaline and acidic washing water resulting from purifying dinitrotoluene or mononitrobenzene. Such process waste water contains, in addition to mononitrotoluene and dinitrotoluene or mononitrobenzene and dinitrobenzene, for example, other nitration by-products, such as mononitrocresol, dinitrocresol, mononitrophenol or dinitrophenol (all of which are commonly referred to as aromatic alcohols), picric acid and nitrobenzoic acid, or has high total nitrogen concentration. There are two reasons for removing such materials from aqueous waste water. First, since an aromatic nitro compound is present up to a concentration of 2.5 wt% or more in the process waste water, discharging non-treated waste water means that the yield of a desired product may be lost. Second, aromatic alcohols do not easily decompose in a biological waste water disposal system and show toxicity to microbes, and 500 ppm or more of high total nitrogen concentration makes it difficult to operate typical biological waste water disposal facilities.

A variety of methods for the treatment of waste water produced in the course of nitration of aromatic compounds have been conventionally proposed.

Korean Patent Publication No. 1990-0004634 discloses a method of treating aromatic alcoholic by-products, including (1) extracting aromatic alcoholic by-products from nitration waste water by mixing the nitration waste water with a solvent and an acid, subjecting this mixture to solvent extraction at elevated temperature and acidic pH to provide a solvent solution containing aromatic alcoholic by-products, (2) subjecting the solvent solution containing the aromatic alcoholic by-products to distillation to recover the solvent from the solvent solution and produce a residue containing the aromatic alcoholic by-products, and (3) incinerating the residue. However, this patent does not propose treatment or disposal processes for aqueous waste water. Furthermore, this patent is problematic because a complicated solvent extraction process has to be carried out to treat the waste water, and excessive vapor and electricity must be used, undesirably increasing the manufacturing cost of products.

Korean Patent Publication No. 1999-0082978 discloses a method of decomposing aromatic nitro compounds contained in waste water, including heating waste water to 150 - 350°C at a pressure of 10 - 300 bar so that the aromatic nitro compounds in waste water or mixtures of two or more thereof are decomposed, wherein the aromatic nitro compounds contained in waste water are thermally decomposed so as to enable biological treatment. However, this method requires thermal decomposition equipment for high temperature and also large amounts of vapor and electricity to operate the equipment, and furthermore the total nitrogen level in the treated aqueous material is high, making it difficult to perform direct biological treatment.

On the other hand, Korean Patent Publication Nos. 2005-0002620 and 2006-0046629 disclose a method of treating waste water obtained during preparing aromatic nitro compounds. Although this method focuses only on procedures for recovering nitrated products from aqueous waste water and separating and treating undesired secondary components which are nitrated, it does not describe the treatment of waste water itself which remains behind after the above treatment. The aqueous waste water left behind after recovering the nitrated products is still high in chemical oxygen demand (COD) and total nitrogen (TN) levels, and thus must be wasted after essentially performing additional processes such as microorganism treatment, etc.

Also, some of commercially available processes are performed by adsorbing aromatic alcohols from nitration waste water using an ion exchange resin to remove them, and subjecting the residual liquid which is not adsorbed to microorganism treatment. However, this method requires the use of an additional chemical to adjust the pH in order to facilitate the adsorption onto the ion exchange resin, and also requires complicated facilities and operation, including equipment for recovering aromatic alcohols adsorbed onto the ion exchange resin and additional facilities for treating the recovered aromatic alcohols.

### Disclosure

### Technical Problem

Accordingly, an object of the present invention is to provide a method of effectively treating aqueous waste water produced during the nitration of compounds.

### Technical Solution

In order to accomplish the above object, the present invention provides a method of effectively treating aqueous waste water produced during the nitration of compounds, using pretreatment operations and vacuum evaporation.

Specifically, the present invention provides a method of treating waste water produced during the nitration of compounds, including mixing acidic and alkaline waste water obtained from washing a nitro compound with an aqueous distillate obtained from concentrating sulfuric acid to provide a waste water mixture; separating the nitro compound from the waste water mixture; and subjecting aqueous waste water left behind after separating the nitro compound to vacuum evaporation.

Preferably, the above method includes (a) mixing the acidic and alkaline waste water obtained from washing the nitro compound with the aqueous distillate obtained from concentrating sulfuric acid to provide a waste water mixture, wherein the waste water mixture has a pH of less than 5; (b) cooling the waste water mixture to 50°C or less to precipitate thereby separating the nitro compound; and (c) subjecting the aqueous waste water left behind after recovering the nitro compound in step (b) to vacuum evaporation, thus obtaining concentrated water containing a high boiling-point organic compound and total nitrogen compounds and condensed water containing a low boiling-point organic compound and total nitrogen compounds.

In step (a), the pH of the mixture is preferably adjusted to 3 or less. If the pH is not sufficiently lowered, alcohols are present in the form of a salt and are thus increased in solubility, which unfavorably has a negative influence on precipitation of an organic material during subsequent cooling.

After step (a) and before step (b), passing the waste water mixture through a vapor extraction tower is preferably performed to remove the low boiling-point organic compound. The recovered low boiling-point organic compound may be reused in the process. If this compound is not passed through the vacuum evaporation tower, it may be gasified in the vacuum evaporation bath, undesirably increasing the COD of condensed water, which makes it difficult to achieve the object of the present invention.

In step (b), the temperature of the mixture is preferably adjusted to 50°C or less. If this temperature is not sufficiently low, the solubility of organics may increase, negatively affecting the precipitation.

In step (c), the vacuum evaporation is preferably performed at a temperature of 50 - 150°C and a pressure of 50 ∼ 300 mmHg. If the vacuum evaporation temperature is lower than 50°C, the vacuum evaporation rate is slow. In contrast, if this temperature is above 150°C, high boiling-point organics may evaporate, making it difficult to control the COD. Also, the case where the vacuum level is low may result in a slow vacuum evaporation rate, whereas the case where the vacuum level is high makes it difficult to control the COD.

The concentrated water obtained in step (c) may be subjected to burning up or incineration.

The condensed water obtained in step (c) may be discharged unchanged, or may be recycled into washing water for washing the nitro compound.

Furthermore, the condensed water may be discharged unchanged as mentioned above, or may be subjected to activated carbon treatment or microorganism treatment to stably control the COD before being discharged.

The condensed water obtained in step (c) may have COD of 300 ppm or less and TN concentration of 200 ppm or less.

The compounds which are to be subjected to nitration may include not only an aromatic compound but also an aliphatic compound.

Specifically, the waste water treating method according to the present invention may be applied to the treatment of waste water produced when nitrating compounds such as toluene, benzene, phenol, adipic acid or cellulose, and thus may be applied to treatment of waste water resulting from the nitration of a variety of compounds, including preparation process of not only mononitrotoluene, dinitrotoluene and nitrobenzene but also nylon and nitrocellulose, etc.

### Advantageous Effects

According to the method of the present invention, high-concentration organics, organic materials which cannot be subjected to microorganism treatment, and high-concentration total nitrogen compounds can be subjected to a comparatively simple pretreatment process and also separated and treated using a vacuum evaporation apparatus which is single equipment, thus obviating the need for investment in complicated pretreatment equipment to perform microorganism treatment and also the need for additional chemicals. Accordingly, the vapor, electricity and chemicals necessary to operate the equipment can be kept to the minimum, consequently reducing the manufacturing cost of products. Also, condensed water can be reused in the process, making it possible to reduce additional treatment costs and facilities due to the discharge of waste water, and in particular there is no need for a site accommodating large-scale equipment for microorganism treatment. As high-concentration total nitrogen compounds and high boiling-point organic materials are concentrated to high concentration in concentrated water, an additional heat source is not necessary when burning up, and there is no more environmental load placed on water upon incineration. As well, a zero discharge system can be achieved by the present invention when occasion demands.

### Best Mode

The present invention pertains to a method of treating waste water produced during nitration of compounds, including (a) mixing acidic and alkaline waste water obtained from washing a nitro compound with an aqueous distillate obtained from concentrating sulfuric acid to provide a waste water mixture, wherein the waste water mixture has a pH of less than 5; (b) cooling the waste water mixture to 50°C or less to precipitate thereby separating the nitro compound; (c) subjecting aqueous waste water left behind after recovering the nitro compound in step (b) to vacuum evaporation, thus obtaining concentrated water containing a high boiling-point organic compound and total nitrogen compounds and condensed water containing a low boiling-point organic compound and total nitrogen compounds.

In these procedures, in particular, the nitration of an aromatic compound is described in detail below.

In the typical nitration of an aromatic hydrocarbon, the hydrocarbon is reacted with a mixture of sulfuric acid and nitric acid, i.e. mixed acid to produce two streams. The two streams are sulfuric acid and a crude aromatic nitro compound diluted with the reaction water and water present in the nitric acid that has been used.

The crude aromatic nitro compound includes an actually desired reaction product containing 1.5 wt% or less of sulfuric acid, 0.5 ∼ 1.2 wt% of nitric acid, and about 1 wt% or less of nitration by-products. Examples of the nitration by-products may include nitrocresol, picric acid, nitrophenol and nitrobenzoic acid. In typical processes, acid and nitration by-products are removed from the crude aromatic compounds by water washings (2 ∼ 4 times). In one or more of the washings, the washing water may contain a base. Typically, the base used is 2 - 10 wt% of sodium hydroxide or sodium carbonate. Upon acidic aqueous washing, sulfuric acid and nitric acid are thoroughly removed from the nitrated product, whereas upon alkaline washing, salt-forming organic components such as nitrocresol, picric acid and nitrobenzoic acid move to an aqueous phase.

In the process according to the present invention, waste water obtained from washing the acidic and alkaline aromatic nitro compounds is mixed with waste water obtained from concentrating sulfuric acid [step (a)]. After step (a) and before step (b), to remove the low boiling-point organic compound from the waste water mixture, the waste water mixture may be fed into a vapor extraction tower and into which vapor is also fed so that the low boiling-point organic compound is recovered. As such, passing the waste water through the vapor extraction tower may be or may not be conducted depending on the properties of the waste water, and is not essential. The waste water passed through the vapor extraction tower is combined, and then this waste water mixture is passed through a heat exchanger so that the temperature thereof is lowered to 50°C or less. As such, organic phase components such as dinitrotoluene, mononitrotoluene, dinitrobenzene, etc. are precipitated from the mixture. To separate the organic phase thus formed, the waste water mixture is transferred to an appropriate precipitation vessel. The organic phase components are recovered as products from the precipitation vessel [step (b)]. The aqueous phase which is left behind after recovering the organic phase components from the precipitation vessel is applied to a vacuum evaporation apparatus [step (c)]. The aqueous phase separated from the organic phase components generally contains 50 ∼ 3000 ppm of an aromatic nitro compound, and 100 - 3000 ppm of aromatic alcohol, picric acid and nitrobenzoic acid or salts thereof. Also, the aqueous phase contains 0.4 ∼ 2.0 wt% of each of sulfuric acid and nitric acid or its salt. The vacuum evaporation apparatus evaporates waste water under conditions of a temperature of 50 ∼ 150°C and a pressure of 50 ∼ 300 mmHg. The condensed water in an aqueous phase after vacuum evaporation constitutes 90% or more of the total of the fed amount and typically contains 200 ppm or less of the organic phase components and the total nitrogen compounds. On the other hand, the concentrated water in an aqueous phase constitutes 10% or less of the total of the fed amount and contains tens of thousands of ppm or less of the organic phase materials and the total nitrogen compounds. This organic phase contains high boiling-point compounds, that is, aromatic alcohols such as nitrocresol, etc. The condensed water may be discharged without additional treatment, or may be transferred into facilities for microorganism treatment or activated carbon adsorption so that the amount of organic materials may be decreased to eliminate the environmental load, and may then be discharged or recycled into washing water in the process depending on the operating conditions. The concentrated water may be ultimately disposed by burning up or incineration in a simple manner.

Upon conventional treatment of waste water produced by nitrating aromatic compounds, raw waste water has to be pretreated with an ion exchange resin and then subjected to microorganism treatment, or has to be pretreated using thermal decomposition equipment and then subjected to microorganism treatment. However, in the present invention, a simple pretreatment process and a vacuum evaporation process are performed, whereby the COD or TN levels of the waste water are acceptable to the extent that the waste water can be discharged unchanged even without performing microorganism treatment, thus drastically reducing the installation cost or the operation cost.

The process of the present invention is conducted via the pretreatment procedures of steps (a) and (b) and the vacuum evaporation of step (c), so that the waste water has appropriate COD or TN levels. In the case where only vacuum evaporation is applied without performing pretreatment, it is difficult to achieve appropriate treatment levels.

### Mode for Invention

The following examples are set forth to specifically explain the present invention but should not be construed as limiting the present invention.

### (Example 1)

50 g of acidic treatment water and 150 g of alkaline washing water generated during preparing dinitrotoluene were mixed to produce a mixture having pH adjusted to 1. This solution was cooled to 40°C so that dissolved dinitrotoluene was precipitated for separation from water. The precipitated dinitrotoluene was separated by filtration. The filtrate thus separated had COD of 1000 ppm and TN concentration of 900 ppm. This solution was fed into a vacuum evaporation bath. The treatment was carried out in the vacuum evaporation bath for 30 min at a temperature of 80°C and a pressure of 150 mmHg, thus obtaining 190 g of condensed water and 10 g of concentrated water. This condensed water had COD of 230 ppm and TN concentration of 22 ppm. Also, the amount of nitrocresol having microorganism toxicity was 3 ppm, and this was the extent that this water could be discharged to final microorganism treatment facilities after additionally lowering the COD.

### (Example 2)

700 g of acidic treatment water and 300 g of alkaline washing water generated during preparing mononitrobenzene were mixed to produce a mixture having pH adjusted to 1.5. A small amount of sulfuric acid was added to adjust the pH. This solution was cooled to 45°C so that dissolved nitrobenzene was layer-separated from water. Vapor was blown into the layer-separated aqueous solution for 10 min so that the benzene and vapor were removed together. This solution had COD of 3300 ppm and TN concentration of 250 ppm. The solution was fed into a vacuum evaporation bath. The treatment was carried out in the vacuum evaporation bath for 30 min at a temperature of 80°C and a pressure of 170 mmHg, thus obtaining 880 g of condensed water and 120 g of concentrated water. The condensed water had COD of 180 ppm and TN concentration of 20 ppm, and thus could be recycled into washing water in the process.

## Claims

1. A method of treating waste water produced during nitration of a compound, comprising:
mixing acidic and alkaline waste water obtained from washing a nitro compound with an aqueous distillate obtained from concentrating sulfuric acid to provide a waste water mixture;
separating the nitro compound from the waste water mixture; and
subjecting aqueous waste water left behind after separating the nitro compound to vacuum evaporation.

2. The method of claim 1, comprising:
(a) mixing the acidic and alkaline waste water obtained from washing the nitro compound with the aqueous distillate obtained from concentrating sulfuric acid to provide a waste water mixture, wherein the waste water mixture has a pH of less than 5;
(b) cooling the waste water mixture to 50°C or less to precipitate thereby separating the nitro compound; and
(c) subjecting aqueous waste water left behind after recovering the nitro compound in step (b) to vacuum evaporation, thus obtaining concentrated water containing a high boiling-point organic compound and total nitrogen compounds and condensed water containing a low boiling-point organic compound and total nitrogen compounds.

3. The method of claim 2, wherein in step (a), the pH of the mixture is adjusted to 3 or less.

4. The method of claim 2, further comprising passing the waste water mixture obtained in (a) through a vapor extraction tower to remove the low boiling-point compound, after step (a) and before step (b).

5. The method of claim 1 or 2, wherein the vacuum evaporation is performed at a temperature of 50 ∼ 150°C and a pressure of 50 ∼ 300 mmHg.

6. The method of claim 2, wherein the concentrated water is subjected to burning up or incineration.

7. The method of claim 2, wherein the condensed water is discharged, or is recycled into washing water for washing the nitro compound.

8. The method of claim 7, wherein the condensed water is subjected to microorganism treatment or filtration using activated carbon before being discharged.

9. The method of claim 2, wherein the condensed water has chemical oxygen demand of 300 ppm or less and total nitrogen concentration of 60 ppm or less.

10. The method of claim 1, wherein the compound which is to be subjected to nitration comprises an aromatic compound or an aliphatic compound.

11. The method of claim 1, wherein the compound which is to be subjected to nitration is selected from the group consisting of toluene, benzene, phenol, adipic acid and cellulose.
